# EUROPÄISCHE PATENTSCHRIFT

(11) **EP 2 847 066 B1**
(45) Veröffentlichungstag und Bekanntmachung des Hinweises auf die Patenterteilung: **03.01.2018**
(21) Anmeldenummer: 13727034.4
(22) Anmeldetag: 12.04.2013
(51) Int. Cl.: B62M 6/40, B62M 6/45, B62M 6/50

(54) **FAHRZEUG, INSBESONDERE FAHRRAD, MIT ELEKTRISCHEM HILFSANTRIEB**
VEHICLE, ESPECIALLY BICYCLE, WITH ELECTRICAL MOTOR ASSISTANCE
VEHICULE, EN PARTICULIER BICYCLETTE, ASSISTÉ D' UN MOTEUR ELECTRIQUE

(30) Priorität: 11.05.2012 DE 102012104150
(43) Veröffentlichungstag der Anmeldung: 18.03.2015
(73) Patentinhaber: Strothmann, Rolf, 66740 Saarlouis (DE)
(72) Erfinder: Strothmann, Rolf, 66740 Saarlouis (DE)
(74) Vertreter: Patentanwälte Bernhardt / Wolff Partnerschaft mbB
(86) Internationale Anmeldenummer: PCT/DE2013/100139
(87) Internationale Veröffentlichungsnummer: WO 2013/167115

(56) Entgegenhaltungen:
- DE-A1-102010 039 852
- DE-C1- 3 722 728
- DE-C1- 19 617 959
- DE-U1- 29 922 683
- DE-U1-202010 012 992

## Beschreibung

Die Erfindung betrifft ein Fahrzeug, insbesondere Fahrrad, mit einem durch Muskelkraft zu betätigenden Kurbelantrieb, der in lösbarer Antriebsverbindung mit wenigstens einem angetriebenen Rad steht, und mit einem den Kurbelantrieb unterstützenden elektrischen Hilfsantrieb, wobei das Fahrzeug bei gelöster Antriebsverbindung zwischen dem Kurbelantrieb und Rad allein über den Hilfsantrieb antreibbar ist.

Durch Benutzung sind Fahrräder bekannt, die sich wie ein normales Fahrrad bewegen lassen, bei denen aber ein elektrischer Hilfsantrieb dafür sorgt, dass sich die aufzubringende Pedalantriebskraft in Grenzen hält. Die verringerte, vom Benutzer aufzubringende Antriebskraft erlaubt höhere Fahrgeschwindigkeiten, die, ohne entsprechend die Übersetzung ändernde Einrichtungen, mit schnellen, als unangenehm empfundenen Beinbewegungen verbunden sind.

Die DE 10 2010 039 852 A1 beschreibt ein Verfahren und eine Vorrichtung zur Bestimmung des Offsetwertes eines Drehmomentsensors, der das durch Fahrradtretkurbeln auf das Kettenrad übertragene Drehmoment erfasst. Ein in diesem Zusammenhang beschriebenes Fahrrad weist einen Freilauf in der Hinterradnabe und eine mehrere Ritzel umfassende, an der Hinterradnabe angeordnete Gangschaltung auf. Ein elektrischer Hilfsantrieb greift am Kettenrad an und ist daher nur bei geschlossenem Freilauf antriebswirksam.
Aus der DE 37 22 728 C1 geht eine Vorrichtung zur Messung der von einem Fahrradfahrer an den Tretkurbeln des Fahrrades erbrachten Leistung hervor. Ein in diesem Zusammenhang beschriebenes Fahrrad weist keinen elektrischen Hilfsantrieb auf.
Die DE 196 17 959 C1 betrifft eine Vorrichtung zur Erfassung der auf die Tretkurbel eines Fahrrads ausgeübten Tretkraft anhand gegenseitiger Verdrehung zum Kettenrad koaxialer Geberscheiben. Ausgehend von der erfassten Tretkraft kann ein Hilfsantrieb zugeschaltet werden.
Fahrzeuge der eingangs erwähnten Art gehen jeweils aus DE 20 2010 012 992 U1 sowie DE 299 22 683 U1 hervor. Beschrieben sind Fahrräder mit einem am äußeren Radumfang reib- oder formschlüssig angreifenden elektrischen Hilfsantrieb. Wenn sich ein Tretkurbelantrieb im Freilaufzustand befindet, erfolgt der Antrieb des Fahrrads allein über diesen elektrischen Hilfsantrieb.

Der Erfindung liegt die Aufgabe zugrunde, ein konstruktiv einfaches Fahrzeug der eingangs erwähnten Art zu schaffen, das bei einfachem konstruktiven Aufbau über einen weiten Bereich der Fahrgeschwindigkeit durch den Benutzer bequem handhabbar ist.

Das diese Aufgabe lösende Fahrzeug nach der Erfindung ist dadurch gekennzeichnet, dass eine Steuereinrichtung für den Hilfsantrieb mit einem das Kurbelantriebsmoment erfassenden Sensor und ferner mit einem eine kinematische Größe der Kurbeldrehbewegungen erfassenden Sensor verbunden ist, und dass Einrichtungen zur Lösung der Antriebsverbindung vorgesehen sind.

Vorteilhaft erlaubt diese Erfindungslösung ohne Aufwand für Schaltgetriebeeinrichtungen bei anliegendem Antriebsmoment eine Entkopplung der Drehgeschwindigkeit des Kurbelantriebs von der Fahrgeschwindigkeit des Fahrzeugs.

In einer bevorzugten Ausführungsform ist die Steuerungseinrichtung für den Hilfsantrieb mit einem die Kurbeldrehgeschwindigkeit erfassenden Sensor verbunden.

Zur Entkopplung einer Kupplung oder eines Freilaufs können gesonderte Einrichtungen vorgesehen sein, insbesondere zur Entkopplung abhängig von der genannten kinematischen Größe.

In weiterer Ausgestaltung der Erfindung ist vorgesehen, dass die Steuereinrichtung bei einer vorgegebenen Kurbeldrehgeschwindigkeit unter Lösung der Antriebsverbindung, insbesondere Entkopplung des Freilaufs, von einer Steuerung des Hilfsantriebs anhand zumindest des erfassten Kurbelantriebsmoments zu einer Steuerung des Hilfsantriebs zumindest anhand der erfassten Kurbelgeschwindigkeit übergeht.

Vorteilhaft lässt sich durch die Entkopplung des Freilaufs im oberen Geschwindigkeitsbereich und die erfindungsgemäße Steuerung eine weitere Erhöhung der Geschwindigkeit des Fahrzeugs ohne entsprechende Erhöhung der Kurbeldrehgeschwindigkeit erreichen.

Vorzugsweise stellt die Steuereinrichtung anhand der erfassten Kurbeldrehgeschwindigkeit eine Drehgeschwindigkeit des Hilfsantriebs entsprechend einem vorgegebenen funktionalen Zusammenhang zwischen diesen Drehgeschwindigkeiten ein, so dass eine stufenlose und beliebig veränderbare "Übersetzung" gebildet ist.

Entsprechend dem vorgegebenen Zusammenhang nimmt die Drehgeschwindigkeit des Hilfsantriebs gegenüber der Kurbeldrehgeschwindigkeit vorzugsweise mit einer Steigung > 1 zu. Dadurch ist gesichert, dass oberhalb einer vorgegebenen Kurbeldrehgeschwindigkeit ein Freilauf automatisch von selbst entkoppelt.

Der Hilfsantrieb umfasst vorzugsweise eine elektrische Maschine, die in starrer Antriebsverbindung mit einem angetriebenen Rad des Fahrzeugs derart steht, dass sie sowohl ein Antriebs- als auch Bremsmoment übertragen kann. Durch die starre Antriebsverbindung entspricht die Drehgeschwindigkeit des Hilfsantriebs in jedem Fall der Drehgeschwindigkeit des angetriebenen Rades.

Vorzugsweise sind Einrichtungen zur Erzeugung eines Kurbelbremsmoments bei entkoppeltem Freilauf vorgesehen. Vorteilhaft empfindet der Benutzer beim Kurbeln daher einen gewissen Widerstand, der jedoch bequem bemessen sein kann im Vergleich zu dem Widerstand, der sich ohne Hilfsantrieb bei der betreffenden Fahrgeschwindigkeit ergäbe.

Bei den genannten Einrichtungen zur Erzeugung eines Kurbelbremsmoments handelt es sich vorzugsweise um eine als Generator betreibbare elektrische Maschine.

Zweckmäßig arbeitet die elektrische Maschine unterhalb der vorgegebenen Pedaldrehgeschwindigkeit als unmittelbar den Pedalantrieb unterstützender Motor.

Oberhalb der vorgegebenen Pedaldrehgeschwindigkeit kann die elektrische Maschine einen Energiespeicher des elektrischen Hilfsantriebs aufladen und damit die mit einem Ladezyklus verbundene Reichweite des Fahrzeugs deutlich erhöhen.

In einer Ausführungsform kann die weitere elektrische Maschine oberhalb der vorgegebenen Kurbeldrehgeschwindigkeit unmittelbar Betriebsstrom für den elektrischen Hilfsantrieb liefern.

Eine weitere vorteilhafte Ausführungsform besteht darin, durch die weitere elektrische Maschine einen Rücktritt zu simulieren, indem die elektrische Maschine bei umgekehrter Kurbeldrehbewegung einen Widerstand aufbaut.

Es versteht sich, dass die vorgegebene Drehgeschwindigkeit und die vorgegebenen Zusammenhänge veränderbar und ggf. verschiedene Programmierungen auswählbar sein können.

Die Erfindung wird nachfolgend anhand eines Ausführungsbeispiel und der beiliegenden, sich auf dieses Ausführungsbeispiel beziehenden Zeichnungen weiter erläutert. Es zeigen:
- Fig. 1: ein erfindungsgemäßes, durch Muskelkraft antreibbares Fahrzeug in Form eines Fahrrades mit einer elektrischen Maschine zusätzlich zu einem elektrischen Hilfsantrieb, und
- Fig. 2: eine das Zusammenwirken der Komponenten des Fahrrades von Fig. 1 erläuternde Darstellung.

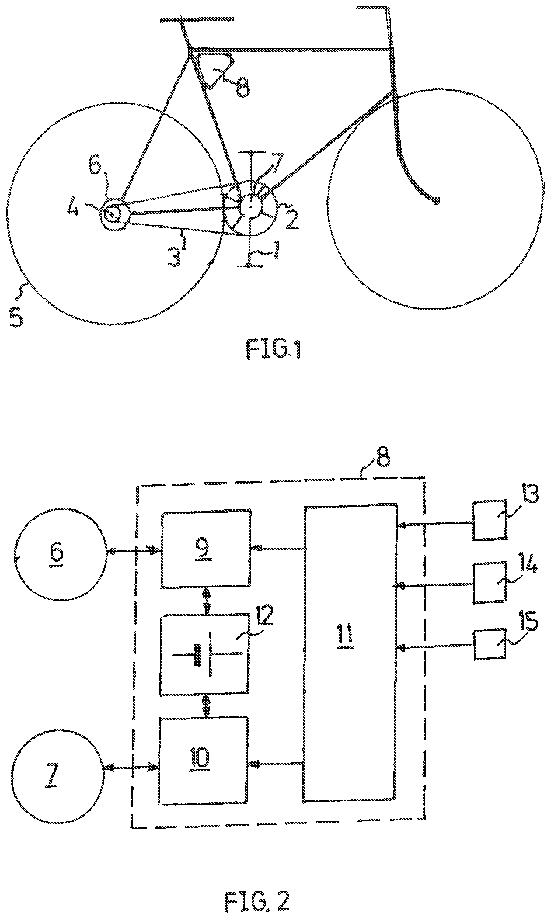

Ein in Fig. 1 gezeigtes Fahrrad weist einen Pedalantrieb auf, der in üblicher Weise durch Pedalkurbeln 1, ein Kettenrad 2, eine Kette 3 und ein Ritzel 4 gebildet ist. Das Ritzel 4 steht über einen Freilauf (nicht gezeigt) in Antriebsverbindung mit dem Hinterrad 5 des Fahrrades.

Koaxial zu dem Ritzel 4 ist als Bestandteil eines elektrischen Hilfsantriebs eine elektrische Maschine 6 angeordnet, die in dem gezeigten Ausführungsbeispiel einen Nabenmotor bildet. Der Läufer der elektrischen Maschine 6 steht in starrer Antriebsverbindung mit dem Rad 5 derart, dass die Maschine auf das Rad sowohl Antriebs- als auch Bremsmomente übertragen kann.

Eine weitere elektrische Maschine 7 ist koaxial zur Drehachse der Pedalkurbeln 1 angeordnet. Ihr Läufer steht in starrer Antriebsverbindung mit dem Kettenrad 2. Abweichend von der Anordnung koaxial zur Pedalkurbeldrehachse ließe sich die elektrische Maschine 7 auch versetzt zu dieser Drehachse anordnen und eine Antriebsverbindung zum Kettenrad 2 über ein Getriebe herstellen.

Wie aus der schematischen Darstellung von Fig. 2 hervorgeht, stehen die elektrischen Maschinen 6 und 7 über eine Leistungssteuerung 9 bzw. 10 in Verbindung mit einer Steuereinrichtung 11, wobei die Steuereinrichtung 11 über die Leistungssteuerungen 9,10 den Stromfluss zwischen den elektrischen Maschinen 6,7 und einer Batterie 12 steuert.

Die Steuereinrichtung 11 steht in dem gezeigten Ausführungsbeispiel in Verbindung mit in Fig. 1 nicht dargestellten Sensoren 13 bis 15, von denen der Sensor 13 die Drehgeschwindigkeit des Läufers der elektrischen Maschine 6, also die Drehgeschwindigkeit des Hinterrades 5, der Sensor 14 das Pedalantriebsmoment und der Sensor 15 die Pedaldrehgeschwindigkeit erfasst.

Die Komponenten 9 bis 12 sind in einer am Rahmen des Fahrrades befestigten, in Fig. 2 durch Strichlinien angedeuteten Baueinheit 8 untergebracht.

Im Fahrbetrieb des Fahrrades ermitteln die Sensoren 13 bis 15 ständig die Drehgeschwindigkeit des Hinterrades 5, das Pedalantriebsmoment sowie die Pedaldrehgeschwindigkeit.

In der Steuereinrichtung 11 sind funktionale Zusammenhänge zwischen dem Pedalantriebsmoment und der Pedaldrehgeschwindigkeit als unabhängige Variable und dem Antriebsmoment der elektrischen Maschine 6 und der Drehgeschwindigkeit des Läufers der elektrischen Maschine 6 als abhängige Variable programmiert. Entsprechend diesen Zusammenhängen erzeugt die Steuerung 11 anhand der durch die Sensoren 14,15 laufend erfassten Werte in die Steuerung 9 eingehende Steuersignale, welche das Antriebsmoment des Motors und ggf. die Drehgeschwindigkeit seines Läufers entsprechend den funktionalen Zusammenhängen einstellen.

Unterhalb eines vorgegebenen Wertes der Pedaldrehgeschwindigkeit wird bei eingekoppeltem Freilauf und damit festliegendem Verhältnis von Pedaldrehgeschwindigkeit und Läuferdrehgeschwindigkeit der Maschine 6 das Antriebsmoment der Maschine 6 entsprechend dem gespeicherten funktionalen Zusammenhang eingestellt, d.h. also abhängig von dem durch den Benutzer des Fahrrades ausgeübten Pedalantriebsmoments und der jeweiligen Pedaldrehgeschwindigkeit.

Es versteht sich, dass in der Steuerung 11 unterschiedliche funktionale Zusammenhänge gespeichert sein können, die ggf. vom Benutzer auswählbar sind. Eine mögliche Programmierung kann darin bestehen, dass der Benutzer unabhängig von der jeweils tatsächlich aufzubringenden Last stets nur ein konstantes Pedalantriebsmoment aufbringen muss, auf das die Steuerung 9 durch entsprechende Änderung des Antriebsmoments der elektrischen Maschine 6 einregelt. Natürlich kann der konstante, vom Benutzer aufzubringende Lastwert änderbar sein und insbesondere von der jeweiligen Pedaldrehgeschwindigkeit abhängen.

Oberhalb des oben genannten vorgegebenen Wertes der Pedaldrehgeschwindigkeit geht die Steuereinrichtung 11 dazu über, nur noch anhand der Pedaldrehgeschwindigkeit bei entkoppeltem Freilauf die Drehgeschwindigkeit des Läufers der Maschine 6 einzustellen. Während die Entkopplung durch gesonderte Einrichtungen erfolgen könnte, ist bei geeignetem funktionalen Zusammenhang zwischen den genannten Drehgeschwindigkeiten gesichert, dass sich der Freilauf bei dieser Geschwindigkeit von selbst löst, indem die Geschwindigkeit der elektrischen Maschine, die für eine bestimmte Pedaldrehgeschwindigkeit einzustellen ist, größer als die dieser Pedaldrehgeschwindigkeit entsprechende Drehgeschwindigkeit ist.

Der Zusammenhang zwischen den Drehgeschwindigkeiten kann so gewählt sein, dass eine geringe Änderung der Pedaldrehgeschwindigkeit zu einer starken Erhöhung der Läuferdrehgeschwindigkeit der Maschine 6 und damit der Fahrgeschwindigkeit des Fahrrades führt. Der Benutzer kann daher vorteilhaft verhältnismäßig hohe Geschwindigkeiten fahren, ohne entsprechend diesen Geschwindigkeiten schnell treten zu müssen. Einrichtungen zur Änderung des Übersetzungsverhältnisses können entfallen, was eine wesentliche konstruktive Vereinfachung des Fahrrades zur Folge hat.

Oberhalb des betreffenden Wertes der Pedaldrehgeschwindigkeit, der willkürlich oder programmgesteuert veränderbar sein kann, kommt die elektrische Maschine 7 ins Spiel, die ein Pedalbremsmoment erzeugt, so dass der Fahrradbenutzer einen gewissen Widerstand verspürt. Es versteht sich, dass dieser deutlich geringer sein kann, als müsste der Benutzer er die mit der hohen Fahrgeschwindigkeit verbundene Last allein durch seine Muskelkraft aufbringen.

Die elektrische Maschine 7 kann so als Generator arbeiten, der, gesteuert durch die Steuereinrichtung 11 und die Leistungssteuerung 10, in dieser Phase die Batterie 12 lädt. Neben der Rekuperation durch die elektrischen Maschine 6 bei Bremsvorgängen lässt sich durch diese zusätzliche Aufladung die mit einem Ladezyklus verbundene Reichweite des Fahrrades merklich erhöhen.

Unterhalb des Wertes der Pedaldrehgeschwindigkeit lässt sich die weitere Maschine 7 als zusätzlich zur Maschine 6 antreibender Motor nutzen.

Durch die elektrische Maschine 7 ließe sich auch eine Art Rücktritt simulieren, indem sich durch diese Maschine auch bei umgekehrter Pedaldrehrichtung ein Bremsmoment aufbauen lässt, wobei durch diese Drehung rückwärts eine das Fahrrad bremsende Einrichtung aktiviert und unter Rekuperation durch zusätzliche Bremsung mit Hilfe der Maschine 6 Elektroenergie zurückgewonnen wird.

## Patentansprüche

1. Fahrzeug, insbesondere Fahrrad, mit einem durch Muskelkraft zu betätigenden Kurbelantrieb (1), der in lösbarer Antriebsverbindung mit wenigstens einem angetriebenen Rad (5) steht, und mit einem den Kurbelantrieb (1) unterstützenden elektrischen Hilfsantrieb (6), wobei das Fahrzeug bei gelöster Antriebsverbindung zwischen dem Kurbelantrieb (1) und dem Rad (5) allein über den Hilfsantrieb (6) antreibbar ist,
**dadurch gekennzeichnet,**
**dass** eine Steuereinrichtung (11) für den Hilfsantrieb (6) mit einem das Kurbelantriebsmoment erfassenden Sensor (14) und ferner mit einem eine kinematische Größe der Kurbeldrehbewegung erfassenden Sensor (15) verbunden ist, und dass Einrichtungen zur Lösung der Antriebsverbindung vorgesehen sind.

2. Fahrzeug nach Anspruch 1,
**dadurch gekennzeichnet,**
**dass** die Steuereinrichtung (11) für den Hilfsantrieb (6) mit einem die Kurbeldrehgeschwindigkeit erfassenden Sensor (15) verbunden ist.

3. Fahrzeug nach Anspruch 1 oder 2,
**dadurch gekennzeichnet,**
**dass** die Einrichtungen zur Lösung der Antriebsverbindung zur Entkopplung einer Kupplung oder eines Freilaufs, vorzugsweise abhängig von der kinematischen Größe vorgesehen sind.

4. Fahrzeug nach einem der Ansprüche 1 bis 3,
**dadurch gekennzeichnet,**
**dass** die Steuereinrichtung (11) bei einer vorgegebenen Kurbeldrehgeschwindigkeit unter Lösung der Antriebsverbindung, insbesondere Entkopplung des Freilaufs, von einer Steuerung des Hilfsantriebs anhand zumindest des erfassten Kurbelantriebsmoments zu einer Steuerung des Hilfsantriebs zumindest anhand der erfassten Kurbeldrehgeschwindigkeit übergeht.

5. Fahrrad nach Anspruch 4,
**dadurch gekennzeichnet,**
**dass** die Steuereinrichtung (11) oberhalb der für den Steuerungsübergang vorgegebenen Kurbeldrehgeschwindigkeit anhand der fortlaufend erfassten Kurbeldrehgeschwindigkeit eine Drehgeschwindigkeit des Hilfsantriebs entsprechend einem vorgegebenen funktionalen Zusammenhang zwischen diesen Drehgeschwindigkeiten einstellt.

6. Fahrrad nach Anspruch 5,
**dadurch gekennzeichnet,**
**dass** entsprechend dem vorgegebenen Zusammenhang die Drehgeschwindigkeit des Hilfsantriebs gegenüber der entsprechenden Kurbeldrehgeschwindigkeit mit einer Steigung > 1 zunimmt.

7. Fahrrad nach einem der Ansprüche 1 bis 6,
**dadurch gekennzeichnet,**
**dass** der elektrische Hilfsantrieb eine elektrische Maschine (6) umfasst, deren Läufer in starrer, sowohl zur Übertragung eines Antriebs als auch Bremsmoments geeigneten Antriebsverbindung mit dem angetriebenen Rad (5) des Fahrzeugs steht.

8. Fahrrad nach einem der Ansprüche 1 bis 7,
**dadurch gekennzeichnet,**
**dass** Einrichtungen zur Erzeugung eines Kurbelbremsmoments bei gelöster Antriebsverbindung vorgesehen sind.

9. Fahrrad nach Anspruch 8,
**dadurch gekennzeichnet,**
**dass** die genannten Einrichtungen eine vor der Kupplung oder dem Freilauf angeordnete, als Generator betreibbare weitere elektrische Maschine (7) aufweisen.

10. Fahrrad nach Anspruch 9,
**dadurch gekennzeichnet,**
**dass** die weitere elektrische Maschine (7) unterhalb der vorgegebenen Kurbeldrehgeschwindigkeit als den Kurbelantrieb unterstützender Motor betreibbar ist.

11. Fahrrad nach Anspruch 9 oder 10,
**dadurch gekennzeichnet,**
**dass** die weitere elektrische Maschine (7) oberhalb der vorgegebenen Kurbeldrehgeschwindigkeit zur Aufladung eines Energiespeichers (12) des elektrischen Hilfsantriebs vorgesehen ist.

12. Fahrrad nach einem der Ansprüche 9 bis 11,
**dadurch gekennzeichnet,**
**dass** die weitere elektrische Maschine (7) oberhalb der vorgegebenen Kurbeldrehgeschwindigkeit unmittelbar Betriebsstrom für den elektrischen Hilfsantrieb liefert.

13. Fahrrad nach einem der Ansprüche 9 bis 12,
**dadurch gekennzeichnet,**
**dass** die weitere elektrische Maschine bei umgekehrter Kurbeldrehrichtung zur Simulation eines Rücktritts ein Bremsmoment aufbaut.

14. Fahrrad nach einem der Ansprüche 4 bis 10,
**dadurch gekennzeichnet,**
**dass** die vorgegebene Kurbeldrehgeschwindigkeit sowie ggf. zur Steuerung verwendete funktionalen Zusammenhänge, insbesondere zwischen den Drehgeschwindigkeiten, veränderbar sind.

## Claims

1. Vehicle, in particular bicycle, having a crank drive (1) which can be activated by muscle force and has a releasable drive connection to at least one driven wheel (5), and having an electric auxiliary drive (6) which assists the crank drive (1), wherein when the drive connection between the crank drive (1) and the wheel (5) is released the vehicle can be driven solely via the auxiliary drive (6),
**characterized**
**in that** a control device (11) for the auxiliary drive (6) is connected to a sensor (14) which senses the crank drive torque, and also to a sensor (15) which senses a kinematic variable of the crank rotational movement, and in that devices for releasing the drive connection are provided.

2. Vehicle according to Claim 1,
**characterized**
**in that** the control device (11) for the auxiliary drive (6) is connected to a sensor (15), which senses the crank rotational speed.

3. Vehicle according to Claim 1 or 2,
**characterized**
**in that** the devices for releasing the drive connection for decoupling a clutch or a freewheel are preferably provided in dependence on the kinematic variable.

4. Vehicle according to one of Claims 1 to 3,
**characterized**
**in that** at a predefined crank rotational speed the control device (11) changes over, while releasing the drive connection, in particular decoupling the freewheel, from control of the auxiliary drive on the basis of at least the sensed crank drive torque to control of the auxiliary drive at least on the basis of the sensed crank rotational speed.

5. Bicycle according to Claim 4,
**characterized**
**in that** above the crank rotational speed which is predefined for the control changeover the control device (11) sets, on the basis of the continuously sensed crank rotational speed, a rotational speed of the auxiliary drive corresponding to a predefined functional relationship between these rotational speeds.

6. Bicycle according to Claim 5,
**characterized**
**in that** in accordance with the predefined relationship the rotational speed of the auxiliary drive increases with respect to the corresponding crank rotational speed with a gradient > 1.

7. Bicycle according to one of Claims 1 to 6,
**characterized**
**in that** the electric auxiliary drive comprises an electric machine (6) whose rotor has a rigid drive connection to the driven wheel (5) of the vehicle, said drive connection being suitable for transmitting drive and braking torque.

8. Bicycle according to one of Claims 1 to 7,
**characterized**
**in that** devices for generating a crank braking torque when the drive connection is released are provided.

9. Bicycle according to Claim 8,
**characterized**
**in that** the specified devices have a further electric machine (7) which is arranged upstream of the clutch or freewheel and can be operated as a generator.

10. Bicycle according to Claim 9,
**characterized**
**in that** below the predefined crank rotational speed the further electric machine (7) can be operated as a motor which assists the crank drive.

11. Bicycle according to Claim 9 or 10,
**characterized**
**in that** above the predefined crank rotational speed the further electric machine (7) is provided for charging an energy store (12) of the electric auxiliary drive.

12. Bicycle according to one of Claims 9 to 11,
**characterized**
**in that** above the predefined crank rotational speed the further electric machine (7) supplies operating current for the electric auxiliary drive directly.

13. Bicycle according to one of Claims 9 to 12,
**characterized**
**in that** when the crank rotational direction is reversed the further electric machine builds up a braking torque in order to simulate a backpedal brake.

14. Bicycle according to one of Claims 4 to 10,
**characterized**
**in that** the predefined crank rotational speed and functional relationships which are used, if appropriate, for control, in particular between the rotational speeds, are variable.

## Revendications

1. Véhicule, en particulier bicyclette, comportant un entraînement à manivelle (1) à actionner par la force musculaire, qui est en liaison d'entraînement détachable avec au moins une roue entraînée (5), et comportant un entraînement auxiliaire électrique (6) assistant l'entraînement à manivelle (1), et dans l'état détaché de la liaison d'entraînement entre l'entraînement à manivelle (1) et la roue (5), le véhicule peut être entraîné par le seul entraînement auxiliaire (6),
**caractérisé en ce que**
un dispositif de commande (11) pour l'entraînement auxiliaire (6) est connecté à un capteur (14) détectant le couple d'entraînement à manivelle et en outre à un capteur (15) détectant une grandeur cinématique du mouvement de rotation de la manivelle,
et **en ce qu'**il est prévu des moyens pour détacher la liaison d'entraînement.

2. Véhicule selon la revendication 1,
**caractérisé en ce que**
le dispositif de commande (11) pour l'entraînement auxiliaire (6) est connecté à un capteur (15) qui détecte la vitesse de rotation de la manivelle.

3. Véhicule selon la revendication 1 ou 2,
**caractérisé en ce que**
les moyens pour détacher la liaison d'entraînement sont prévus pour découpler un accouplement ou une roue libre, de préférence en fonction de la grandeur cinématique.

4. Véhicule selon l'une des revendications 1 à 3,
**caractérisé en ce que**
lors d'une vitesse de rotation donnée de la manivelle, en détachant la liaison d'entraînement, en particulier en découplant la roue libre, le dispositif de commande (11) passe d'une commande de l'entraînement auxiliaire basée au moins sur le couple d'entraînement détecté de la manivelle, vers une commande de l'entraînement auxiliaire basée au moins sur la vitesse de rotation de la manivelle.

5. Bicyclette selon la revendication 4,
**caractérisé en ce que**
au-dessus de la vitesse de rotation donnée de la manivelle pour le passage de la commande, le dispositif de commande (11) règle une vitesse de rotation de l'entraînement auxiliaire, en correspondance d'une relation fonctionnelle donnée entre ces vitesses de rotation, en se basant sur la vitesse de rotation détectée en continu de la manivelle.

6. Bicyclette selon la revendication 5,
**caractérisé en ce que**
en correspondance de la relation donnée, la vitesse de rotation de l'entraînement auxiliaire augmente d'un gradient > 1 par rapport à la vitesse de rotation correspondante de la manivelle.

7. Bicyclette selon l'une des revendications 1 à 6,
**caractérisé en ce que**
l'entraînement auxiliaire électrique comprend une machine électrique (6) dont le rotor est en liaison d'entraînement avec la roue entraînée (5) du véhicule, ladite liaison étant rigide et appropriée à transmettre aussi bien un entraînement qu'un couple de freinage.

8. Bicyclette selon l'une des revendications 1 à 7,
**caractérisé en ce que**
il est prévu des moyens pour générer un couple de freinage de la manivelle, la liaison d'entraînement étant détachée.

9. Bicyclette selon la revendication 8,
**caractérisé en ce que**
lesdits moyens comprennent une autre machine électrique (7) agencée en avant de l'accouplement ou de la roue libre et susceptible de fonctionner en tant que générateur.

10. Bicyclette selon la revendication 9,
**caractérisé en ce que**
au-dessous de la vitesse de rotation donnée de la manivelle, l'autre machine électrique (7) est susceptible de fonctionner en tant que moteur assistant l'entraînement de manivelle.

11. Bicyclette selon la revendication 9 ou 10,
**caractérisé en ce que**
au-dessus de la vitesse de rotation donnée de la manivelle, l'autre machine électrique (7) est prévue pour charger un accumulateur d'énergie (12) de l'entraînement auxiliaire électrique.

12. Bicyclette selon l'une des revendications 9 à 11,
**caractérisé en ce que**
au-dessus de la vitesse de rotation donnée de la manivelle, l'autre machine électrique (7) fournit directement un courant de service pour l'entraînement auxiliaire électrique.

13. Bicyclette selon l'une des revendications 9 à 12,
**caractérisé en ce que**
lors d'une direction de rotation inversée de la manivelle, l'autre machine électrique (7) établit un couple de freinage pour simuler un rétropédalage.

14. Bicyclette selon l'une des revendications 4 à 10,
**caractérisé en ce que**
la vitesse de rotation donnée de la manivelle ainsi que des relations fonctionnelles le cas échéant appliquées pour la commande, en particulier entre les vitesses de rotation, sont modifiables.
